# EUROPEAN PATENT APPLICATION

(11) **EP 4 819 125 A1**
(43) Date of publication of application: **07.10.2026**
(21) Application number: 25167950.2
(22) Date of filing: 02.04.2025
(51) Int. Cl.: G10K 15/02, B60Q 5/00, G08G 1/0962

(54) **VEHICLE, APPARATUS, DATA CARRIER, COMPUTER PROGRAM, AND METHOD FOR A VEHICLE**

(71) Applicant: Elektrobit Automotive GmbH, 91058 Erlangen (DE)
(72) Inventor: Asemann, Peter, 91058 Erlangen (DE)
(74) Representative: Aumovio Corporation

(57) **Abstract**

Embodiments of the present disclosure relate to a vehicle, an apparatus, a data carrier, a computer program, and a method for a vehicle. The method comprises obtaining information on at least one object in an environment of the vehicle from sensor data of at least one environmental sensor of the vehicle and providing the information for generating a characteristic sound for the object in an interior of the vehicle.

## Description

Embodiments of the present disclosure relate to a vehicle, an apparatus, a data carrier, a computer program, and a method for a vehicle. In particular, the present disclosure relates to a concept for an improved environment perception inside a vehicle.

Modern vehicles are increasingly designed with advanced sound isolation technologies to enhance the driving experience. This trend aims to reduce external noise, such as traffic, wind, and engine sounds, creating a quieter and more comfortable cabin environment. However, this heightened sound isolation can impair drivers' and passengers' perception of their surroundings, leading to several potential issues.

One significant concern is the reduced ability to hear important auditory cues from the environment. For instance, the sound of emergency vehicle sirens, honking horns, or even the noise of approaching vehicles can be muffled or entirely blocked out. This can delay a driver's reaction time in critical situations, potentially increasing the risk of accidents. Pedestrians, bicycles, and other subject/objects/participants in traffic can approach the vehicle without the driver noticing. Especially in a modern, sound-isolated car, the entities can't be heard even if they make relevant sound. When drivers are less aware of their surroundings due to sound isolation, it can compromise the safety of these vulnerable road users.

However, reducing the sound isolation of vehicles would lead to more noise in the vehicle's cabin, thereby impairing the user experience.

Hence, there is a demand for a concept of improved environment perception inside a vehicle.

This demand may be satisfied by the subject-matter of the appended independent claims. Optional embodiments are disclosed by the appended dependent claims.

A basic idea of the proposed concept is to detect objects in the environment of a vehicle and play sounds associated with the detected objects inside the vehicle to facilitate the perception of the environment for passengers, e.g., the driver, of the vehicle.

Embodiments provide a method for a vehicle. The method comprises obtaining information on at least one object in an environment of the vehicle from sensor data of at least one environmental sensor of the vehicle and providing the information for generating a characteristic sound for the object in an interior of the vehicle.

In this way, passengers in the interior can be made aware of objects in the environment. In doing so, the proposed concept provides a very natural and non-distracting perception of the objects.

The described concept offers several technical advantages for vehicle systems.

By generating characteristic sounds for objects within the vehicle's interior, the method provides an intuitive and non-visual means of alerting the driver or passengers. The proposed concept of auditory feedback can reduce cognitive load on the driver. Instead of constantly monitoring visual displays, drivers can rely on auditory cues to stay informed about their surroundings, allowing them to focus more on driving.

Moreover, the system's ability to differentiate between various objects and generate distinct sounds for each can help in quickly identifying the nature of the object, whether it's e.g., a pedestrian, another vehicle, or an obstacle. This specificity can lead to faster and more appropriate responses from the driver, further enhancing safety.

In some embodiments, the information includes information on e.g, a type, a position, and/or a motion of the object. Accordingly, the generated sound may be indicative of the type, the position, and/or a motion of the object.

For example, different sounds may be applied for different types of objects.

Alternatively, or additionally, spatial characteristics of the sound may indicate the position and/or the motion of the object. For example, by varying the directionality, volume, and timing of the sound, a 3D-sound system can create an auditory illusion of the object's location and movement. This may further improve the perception of the environment. In particular, the information on the type, the position, and/or a motion of the object offers a more detailed perception of the environment. That offers more detailed auditory feedback for the driver for more informed driving decisions, thereby leading to a higher level of safety.

In some embodiments, the method further comprises generating, based on the information, a sound signal for the characteristic sound in the interior of the vehicle.

In some embodiments, generating the sound includes selecting, based on the information, at least one of a plurality of predefined sounds for the object.

The use of predefined sounds simplifies implementation and reduces computational load. By selecting from a library of predefined sounds based on object information, the system avoids the need for real-time sound synthesis, which can be resource-intensive. Predefined sounds can be stored in a database and quickly retrieved when needed, ensuring rapid response times. This also allows for consistent and recognizable auditory cues (sounds), enhancing user experience.

So, in some embodiments, the information indicates a relative position and/or motion of the object to the vehicle, and the sound is a more dimensional or spatial sound, e.g., a three-dimensional (3D) sound indicative of the relative position and/or motion of the object.

It is further noted that the proposed approach may be at least partly implemented as a computer program and/or computer implemented method. So, steps and/or features of described embodiments may be implemented in a computer program which when it is executed by a computer, or any kind of programmable hardware causes the computer or hardware to execute one or more steps or parts of the proposed approach.

Further embodiments provide a computer program comprising instructions which, when the computer program is executed by a computer, cause the computer to carry out an embodiment of the proposed method.

Further embodiments provide a computer-readable data carrier having stored thereon an embodiment of the proposed computer program.

Further embodiments provide an apparatus for a vehicle. The apparatus comprises one or more interfaces for communication and a data processing circuit configured to execute an embodiment of the proposed method.

In some embodiments, the apparatus further comprises at least one environmental sensor for obtaining information on at least one object in an environment of the vehicle from sensor data of the environmental sensor and/or a sound generator for generating the sound in the interior of the vehicle.

Further embodiments provide a vehicle including an embodiment of the proposed apparatus.

Further, embodiments are now described with reference to the attached drawings. It should be noted that the embodiments illustrated by the referenced drawings show merely optional embodiments as an example and that the scope of the present disclosure is by no means limited to the embodiments presented:

### Brief description of the drawings

Fig. 1 shows a flow chart schematically illustrating an embodiment of a method for a vehicle;
Fig. 2 shows a block diagram schematically illustrating an embodiment of an apparatus according to the proposed approach; and
Fig. 3 schematically illustrates another embodiment of the proposed apparatus.

As already mentioned, the better sound insulation of vehicles to reduce disturbing vehicle noise in practice comes at the expense of the perceptibility of the environment.

The proposed approach provides a solution offering more desired audible feedback on the vehicle's environment while the vehicle may be still sound insulated.

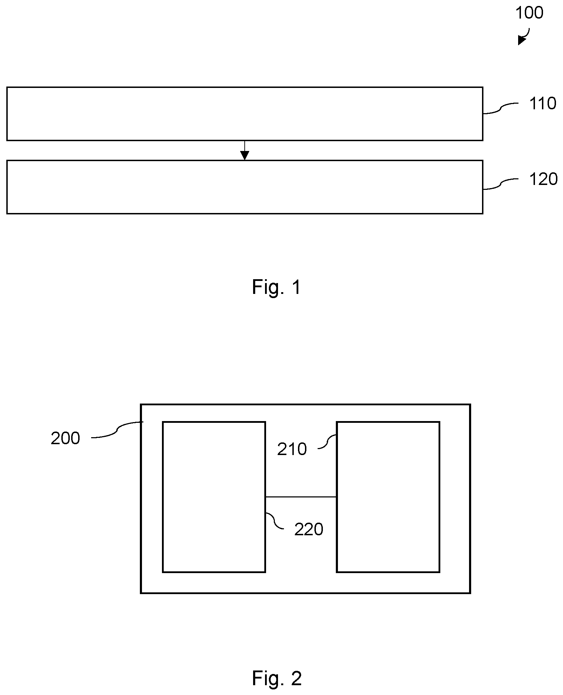

Fig. 1 shows a flow chart schematically illustrating an embodiment of a method 100 for a vehicle.

It is noted that the term "vehicle/s" is to be interpreted broadly in context of the present disclosure. So, vehicles according to the present disclosure may include any kind of vehicle, including various ground vehicles (e.g., car, truck, bus, motorcycle, and/or the like), various watercrafts (e.g., boat), various aircrafts (e.g., planes, helicopters), and/or a combination thereof (e.g., amphibious vehicle).

The described method may encompass multiple steps, which can be executed in various permutations. These permutations may include the combination or division of certain steps, allowing for flexibility in the implementation of the method. The steps may be performed in different sequences or simultaneously, depending on the specific requirements and conditions. This adaptability ensures that the method can be tailored to various applications and scenarios, providing a comprehensive approach to achieving the desired outcome.

It can be seen, that method 100 comprises obtaining 110 information on at least one object in an environment of the vehicle from sensor data of at least one environmental sensor of the vehicle.

In some embodiments, the object may include, but is not limited to, pedestrians, other vehicles, bicycles/cyclists, animals, and/or any further objects occurring in traffic environments. The environment may encompass various settings such as urban areas, highways, rural roads, parking lots, and intersections. The environmental sensors may include, but are not limited to, radar sensors, lidar sensors, ultrasonic sensors, cameras, and infrared sensors. In practice, e.g., the information on the object is determined from advanced driver assistance system (ADAS) object tracking information (LIDA, camera, ultrasonic, map data, other sources) which may allow to identify the object type and locate the object.

The information on the object, obtained from the sensor data, may include various attributes such as the object's type, (relative) position, velocity, direction of movement, and/or relative speed. For instance, the type of object may be identified as a pedestrian, vehicle, or bicycle/cyclist. The information on the position may include information on a distance from the vehicle.

The position may be determined in terms of coordinates relative to the vehicle, while the velocity and direction of movement may indicate how fast and in which direction the object is moving. The distance from the vehicle may provide information on how far the object is from the vehicle, and the relative speed may indicate the speed difference between the object and the vehicle.

Further, method 100 comprises providing 120 the information for generating a characteristic sound for the object in an interior of the vehicle.

To create a characteristic sound for the object, the information may be provided for generating or selecting an appropriate predefined sound from a library of sounds.

The information may be sent to or made accessible for a data processing circuitry configured to obtain the sound based on the information. The data processing circuitry may be the same or separate from a data processing circuit for obtaining and/or providing the information on the object.

For generating the sound, an appropriate electric sound signal may be generated. Then, the electric sound signal may be converted into an audible sound in the interior of the vehicle. For this, desired sound characteristics such as frequency, amplitude, and duration may be encoded in the electric sound signal. This signal then may be amplified and sent to one or more speakers in the interior, where it causes the speaker to produce the desired sound.

In practice, different objects may be associated with different sounds. For example, a pedestrian may be associated with a specific sound that differs from the sound associated with another vehicle, animal, and/or a bicycle.

Then, for each object that is approaching the car or very close to it, a "typical" sound is generated and output via 3D-sound-generation, so that the object can be heard and located in space by the driver subconsciously, contributing to traffic safety by e.g. making the driver aware of objects in the dead angle, or generally aware of the presence of children or animals which might approach the vehicle in an unforeseeable manner.

The position and movement information may be used to modulate the sound's spatial characteristics, such as directionality and volume, to reflect the object's location and motion relative to the vehicle. For instance, if a pedestrian is detected on the left side of the vehicle and is moving towards it, the sound may be played from the left speakers and increase in volume as the pedestrian approaches. When the pedestrian passes the vehicle from the left to the right side, the right speaker may take over playing the sound.

A skilled person having benefit from the present disclosure will appreciate that analogously various other spatial sound technologies may be applied to reflect spatial attributes such as position and motion of the object.

The system may also use additional information, such as the object's speed, to further refine the characteristic sound. An object, such as a truck, may be associated with a deeper, more resonant sound, while a smaller vehicle, such as a car, may be associated with a higher-pitched sound.

Similarly, the speed of the object may influence the sound's rhythm or tempo, with faster-moving objects generating quicker, more urgent sounds. Also, principles of the Doppler-effect may be applied to the sound to indicate whether the object approaches or deviates from the vehicles.

The information on the motion and/or relative position may be also used to only consider approaching and/or close objects (e.g., which are closer than a predefined distance). For example, the sound is only created if the object approaches the vehicle and/or is within a predefined distance from the vehicle.

By leveraging the detailed information on the object, the system can generate characteristic sounds that provide intuitive and immediate auditory feedback to the driver, enhancing situational awareness and safety. The use of predefined sounds, modulated based on the object's attributes, allows for efficient processing and reduces the computational resources required for real-time sound synthesis. This approach ensures that the system can quickly and accurately convey critical information to the driver, improving the overall driving experience.

The aforementioned details may be implemented in combination or isolation in embodiments of the proposed concept.

In a preferred embodiment, e.g., for each object that is approaching the vehicle or which is closer than a predefined distance, a "typical" sound associated with the object type is generated and output via 3D-sound-generation, so that the object can be heard and located in space by the driver subconsciously, contributing to traffic safety by e.g., making the driver aware of objects in the dead angle, or generally aware of the presence of children or animals which might approach the vehicle in an unforeseeable manner.

The "typical" or characteristic sound may be any sound that may be associated with the respective type of object. Typical sounds for different objects can be designed to be intuitive and easily recognizable. For cyclists, bicycle bells ringing or a whirring sound, a sound of bicycle gears, a bicyclist shouting or moaning, a sound of badly maintained brakes or transmission chains might be used. Pedestrians could be associated with a gentle tapping, footsteps, and/or sound voice-like sounds (e.g., made up of some phonemes). A group of people may be represented by conversation sounds. Cars might have a moderate engine hum or a low rumble. Trucks could be represented by a deeper, more resonant engine noise or a heavy rumble. Animals could have characteristic sounds such as a bark for dogs, a meow for cats, or a chirp for birds. These sounds help drivers quickly identify the type of object and respond appropriately.

So, embodiments of the present disclosure may reduce the degree the driver is isolated from the outside world in a sound isolated vehicle. It restores the ability of the driver to locate approaching or surrounding objects around the vehicle by augmenting an acoustic environment of the driver with sounds that the entities around the car could typically make, so they become aware to the driver. It even enables hearing entities if they make no sound, by generating sounds the entities could make.

Another embodiment of the proposed method may include the following steps:
1. Identifying objects that are close or approaching (so they will become close in a predefined period of time, e.g., a 5 seconds)
2. Identifying the object type, e.g., using a camera and sensor data thereof.
3. Selecting a sound that an object of this type could make (e.g., from a sample-bank or an algorithmic sound-generator for each type of object)
4. Generating this sound, locatable in space at an accurate position by the driver, at a noise level the driver can recognize.

Fig. 2 shows a block diagram schematically illustrating an embodiment of such an apparatus 200. The apparatus comprises one or more interfaces 210 for communication and a data processing circuit 220 configured to execute the proposed method.

In embodiments, the one or more interfaces 210 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 220 may correspond to or comprise any type of programable hardware. So, examples of the data processing circuit 220, e.g., comprise a memory, microcontroller, field programable gate arrays, one or more central, and/or graphical processing units. To execute the proposed method, the data processing circuit 220 may be configured to access or retrieve an appropriate computer program for the execution of the proposed method from a memory of the data processing circuit 220 or a separate memory which is communicatively coupled to the data processing circuit 220.

In practice, the proposed apparatus may be installed on a vehicle. So, embodiments may also provide a vehicle comprising the proposed apparatus.

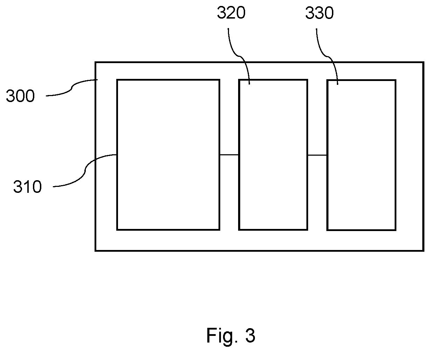

Fig. 3 schematically illustrates another embodiment 300 of the proposed apparatus.

The apparatus 300, e.g., further comprises at least one environmental sensor 310 (see above for more details) for obtaining information on at least one object in an environment of the vehicle from sensor data of the environmental sensor as well as a sound generator 330 for generating the sound in the interior of the vehicle.

The environmental sensor 310, e.g., provides sensor data to a data processing circuit 320 configured to execute an embodiment of the proposed approach. Data processing circuit, e.g., obtains information on the object based on the sensor data and a sound based on the information on the object (see above for more details). As well, the data processing circuit 320 generates an electrical sound signal for generating the sound. The electric sound signal is provided to the sound generator 330 which converts the electrical sound signal into sound waves to produce the obtained sound associated with the object.

As mentioned above, the sound or electric sound signal may be adapted based on information on the object type, the relative position, and the motion of the object.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

## Claims

1. A method (100) for a vehicle, the method (100) comprising:
obtaining (110) information on at least one object in an environment of the vehicle from sensor data of at least one environmental sensor of the vehicle; and
providing (120) the information for generating a characteristic sound for the object in an interior of the vehicle.

2. The method (100) of claim 1, wherein the information includes information on a type, a position, and/or a motion of the object.

3. The method (100) of claim 1 or 2, wherein the method (100) further comprises generating, based on the information, a sound signal for the characteristic sound in the interior of the vehicle.

4. The method (100) of claim 3, wherein generating the sound includes selecting, based on the information, at least one of a plurality of predefined sounds for the object.

5. The method (100) of any one of the previous claims, wherein the information indicates a relative position and/or motion of the object to the vehicle, and wherein the sound is a spatial sound indicative of the relative position and/or motion of the object.

6. A computer program comprising instructions which, when the computer program is executed by a computer, cause the computer to carry out the method (100) of any one of the claims 1 to 5.

7. A computer-readable data carrier having stored thereon the computer program of claim 6.

8. An apparatus (200, 300) for a vehicle, the apparatus comprising:
one or more interfaces (210) for communication; and
a data processing circuit (220, 320) configured to execute the method (100) of any one of the claims 1 to 5.

9. The apparatus (200, 300) of claim 8, wherein the apparatus further comprises:
at least one environmental sensor (310) for obtaining information on at least one object in an environment of the vehicle from sensor data of the environmental sensor; and/or
a sound generator (330) for generating the sound in the interior of the vehicle.

10. The apparatus (200) of claim 9, wherein the information indicates a relative position and/or motion of the object to the vehicle, wherein the sound generator is configured for generating three-dimensional, 3D, sound, and wherein the sound is a 3D-sound indicative of the relative position and/or motion of the object.

11. A vehicle including the apparatus (200, 300) of claim 10.
